## Europäisches Patentamt
## European Patent Office
## Office européen des brevets

(11) Veröffentlichungsnummer: **0 293 951**
**A1**

## EUROPÄISCHE PATENTANMELDUNG

(21) Anmeldenummer: **88200782.6**

(22) Anmeldetag: **22.04.88**

(51) Int. Cl.⁴: **F16D 43/02 , F16D 41/10 , F16H 35/04**

Die Bezeichnung der Erfindung wurde geändert (Richtlinien für die Prüfung im EPA, A-III, 7.3).

(30) Priorität: **27.04.87 IT 481987**

(43) Veröffentlichungstag der Anmeldung: **07.12.88 Patentblatt 88/49**

(84) Benannte Vertragsstaaten:
**AT BE CH DE ES FR GB IT LI NL SE**

(71) Anmelder: **Salin, Roberto**
**Via Bivio, 64/2**
**I-39100 Bolzano(IT)**

(72) Erfinder: **Salin, Roberto**
**Via Bivio, 64/2**
**I-39100 Bolzano(IT)**

(74) Vertreter: **Faraggiana, Vittorio, Dr. Ing. et al**
**Ingg. Guzzi e Ravizza S.r.l. Via Boccaccio, 24**
**I-20123 Milano(IT)**

(54) **Freilaufkupplung.**

(57) In einer Freilaufkupplung besteht die Klemmvorrichtung aus einem Eingriffselement (12, 23, 24), das gegenüber der Drehachse (4) auf einer auf einem der beiden Glieder (1, 2) vorgesehenen, zwangsläufigen Bahn (7, 8, 9, 10; 25, 26) radial beweglich ist, aus einer am anderen Glied (2, 1) vorgesehenen Kontrastbahn (13, 22) und aus Mitnahmemitteln (15; 29, 27, 28), die dazu fähig sind, die beiden Glieder in gegenseitigem Eingriff zu bringen, sobald das Abtriebsglied dazu neigt, seine Winkelgeschwindigkeit gegenüber jener des Antriebsgliedes zu vermindern.

FIG.1

FIG. 2

FIG. 9

FIG. 8

EP 0 293 951 A1

## SPERRKUPPLUNG MIT AUSRASTUNG EINES ABTRIEBSGLIEDES AUS EINEM ANTRIEBSGLIED BEI EINER POSITIVEN RELATIVBEWEGUNG ZWISCHEN DEM ABTRIEBSGLIED UND DEM ANTRIEBSGLIED

Die vorliegende Erfindung bezieht sich auf eine Sperrkupplung mit Ausrastung eines Abtriebsgliedes aus einem Antriebsglied bei einer positiven Relativbewegung zwischen dem Abtriebsglied und dem Antriebsglied. Derartige Kupplungen sind beispielsweise bei Fahrrädern als Freilaufsperrkupplungen bekannt.

Vor allem auf dem Gebiet der Kraftfahrzeuge ist die Notwendigkeit bekannt, ein Drehmoment, z.B. in einer Kurve, dem innen liegenden Rad zu übertragen, während das Außenrad "freilaufend" umlaufen sollte, um den Kraftaufwand auf ein Minimun herabzusetzen. So haben Z.B. die sogenannten selbsttätigen Sperrausgleichgetriebe Verwendung gefunden, wobei stirnseitige Oberflächen zwischen dem Abtriebsglied und dem Antriebsglied gegenseitig in Eingriff kommen. Diese Vorrichtungen betragen eine Vielzahl von zusammenzusetzenden Bestandteilen, sie sind daher sehr teuer in ihrer Ausführung und auch ihre Betätigung erfordert Bestandteile, die in ihrer Herstellung sehr kompliziert sind.

Die Hauptaufgabe der vorliegenden Erfindung liegt daher darin, die oben beschriebenen Mängel zu beseitigen und eine Sperrkupplung auszuführen, die einfach in ihrem Aufbau und daher kostengünstig in ihrer Herstellung ist, die insbesondere in Kraftfahrzeugen sowohl bei Vorwärtsgang als auch bei Rückwärtsgang verwendbar ist.

Diese und weitere Aufgaben werden erfindungsgemäß durch eine Sperrkupplung mit Ausrastung eines Abtriebsgliedes aus einem Antriebsglied bei einer positiven Relativbewegung zwischen dem Abtriebsglied und dem Antriebsglied gelöst, wobei ein eine Drehbewegung übertragendes Glied mit einem Abtriebsglied mittels mindestens einer Klemmvorrichtung verbindbar ist, die fähig ist, das Abtriebsglied am Antriebsglied festzulegen, sobald die Geschwindigkeit des Abtriebsgliedes dazu neigt, gegenüber der Winkelgeschwindigkeit des Antriebsgliedes abzufallen, und das Abtriebsglied aus dem Antriebsglied auszurasten, sobald die Winkelgeschwindigkeit des Abtriebsgliedes die Winkelgeschwindigkeit des Antriebsgliedes übersteigt, dadurch gekennzeichnet, daß die erwähnte Klemmvorrichtung von einem zur Drehachse auf einer zwangsläufigen Bahn radialbeweglichen, an einem der beiden Glieder vorgesehenen Eingriffselement, von einer am anderen Glied vorgesehenen Kontrastbahn und von Mitnahmemitteln gebildet ist, die dazu fähig sind, die beiden Glieder in einen gegenseitigen Eingriff zu bringen, sobald das Abtriebsglied dazu neigt, seine Winkelgeschwindigkeit gegenüber jener des Antriebsgliedes zu vermindern.

In einer ersten Ausführungsform sind vier Klemmvorrichtungen vorgesehen, von denen jedes Eingriffselement aus einer Rolle besteht, die von einem konkaven, kreisbogenförmigen, auf einem kreisförmigen Umfang des Antriebsgliedes im Bereich mindestens eines seines Außenabschnittes ausgenommenen Sitz aufgenommen ist, wobei die vier Sitze gleichförmig auf dem genannten kreisförmigen Umfang mit zur Drehachse des Antriebsgliedes parallelen Krümmungsachsen veteilt sind, wobei der genannte Außenab schnitt außen von einem eine kreisförmige Innenfläche aufweisenden Flansch umfaßt wird, der an einem Rohrabschnitt festliegt, der mit einem in Drehung zu versetzenden Mittel verbindbar ist, wobei ein mit Aussparungen versehener Ring, der die Rollen drehbar führt, in einer kreisförmigen, zu Drehmitte des Antriebsgliedes koaxialen Nut verschiebbar ist.

In einer zweiten Ausführungsform der Erfindung sind zwei Klemmvorrichtungen vorgesehen, von denen jedes Eingriffselement aus einem kreisförmigen Zahnsektor besteht, der drehbar von einem an mindestens einer der Stirnflächen des Antriebsgliedes außermittig befestigten Zapfen getragen wird, wobei die Zahnung gegenüber dem Haltezapfen spiegelbildlich geordnet ist, wobei auf die Basis eines jeden Zahnsektors auf einer kurvenförmigen Einbuchtung ein elastisches und von einem im Antriebsglied drehbaren Dorn beaufschlagtes Mittel einwirkt, wobei der Dorn seinerseits mittig vom Abtriebsglied elastisch beaufschlagt wird, sodaß der Dorn bei einer Relativbewegung innerhalb eines von zwei Anschlägen begrenzten Winkels in Drehung gebracht wird, wobei die beiden Anschläge mit einem am Körper des Antriebsgliedes festliegenden Anschlag derart in Berührung kommen, daß die Zähne des Zahnsektors mit einem inneren Zahnkranz eines am Abtriebsglied festliegenden Flansches in Eingriff kommen.

Weitere Ausbildungen, Merkmale und Vorteile der erfindungsgemäßen Sperrkupplung gehen näher aus der folgenden Beschreibung unter Bezugnahme auf die beigelegte Zeichnung hervor. In der Zeichnung zeigen:

Figur 1 die erfindungsgemäße Kupplung in einer teilweise geschnittenen Seitenansicht,

Figur 2 einen Schnitt gemäß der Linie II-II aus Figur 1,

Figur 3 eine Seitenansicht des Antriebsgliedes aus Figuren 1 und 2,

Figur 4 eine Seitenansicht eines Führungsringes,

Figur 5 eine Ansicht gemäß dem Pfeil V aus Figur 4,

Figur 6 die erfindungsgemäße Kupplung in einer teilweise geschnittenen Seitenansicht in einer weiteren Ausbildung,

Figur 7 einen Schnitt gemäß der Linie VII-VII aus Figur 6,

Figur 8 eine der Figur 7 ähnliche Ansicht, jedoch mit einer anderen Lösung zur elastischen Beaufschlagung,

Figur 9 die erfindungsgemäße Kupplung in einer teilweise geschnittenen und aufgebrochenen Ansicht in einer zweiten Ausführungsform,

Figur 10 einen Schnitt gemäß der Linie X-X aus Figur 9,

Figur 11 eine Einzelheit aus Figur 9 und 10,

Figur 12 einen Axialschnitt eines erfindungsgemäßen Abtriebsgliedes,

Figur 13 in einer Seitenansicht das die Achswellen betätigende Antriebsglied,

Figur 14 in Stirnansicht einen Mitnahmedorn,

Figur 15 schaubildlich in einer teilweise aufgebrochenen Seitenansicht eine Beaufschlagungsart des Mitnahmedornes,

Figur 16 einen Axialschnitt durch den Körper eines Antriebsgliedes ohne Zahnsektoren,

Figur 17 eine Variante der Ausführungsform gemäß Figur 1,

Figur 18 einen Schnitt gemäß der Linie XVIII-XVIII aus Figur 17,

Figur 19 eine Variante der Ausführungsform nach Figur 9,

Figur 20 einen Axialschnitt der Kupplung gemäß der Variante aus Figur 19, jedoch ohne Mitnahmeflansch,

Figur 21 einen Radialschnitt des Gelenkkreuzes aus Figur 19,

Figur 22 eine teilweise aufgebrochene Axialansicht aus Figur 21 mit elastischen Kontrastbestandteilen,

Figur 23 die erfindungsgemäße Kupplung in der Variante aus Figur 19 ohne Mitnahmeflanch und mit teilweise dargestellten Keilachswellen,

Figur 24 eine Explosionsansicht von zwei Steuerelementen für die Eingriffszahnsektoren,

Figur 25 die erwähnten Steuerelemente, jeweils von einem Kontrastdorn beaufschlagt (im Bild links) bzw. davon getrennt (im Bild rechts),

Figur 26 und 27 jeweils eine Seitenansicht bzw. Draufsicht eines axialen Kontrastelementes der Steuerelemente der Figuren 24 und 25,

Figur 28 und 29 jeweils eine Seitenansicht bzw. eine Draufsicht eines Drehkontrastelementes der in den Figuren 24 und 25 dargestellten Steuerelemente,

Figur 30 und 31 jeweils eine Seitenansicht bzw. Stirnansicht eines H-Profils.

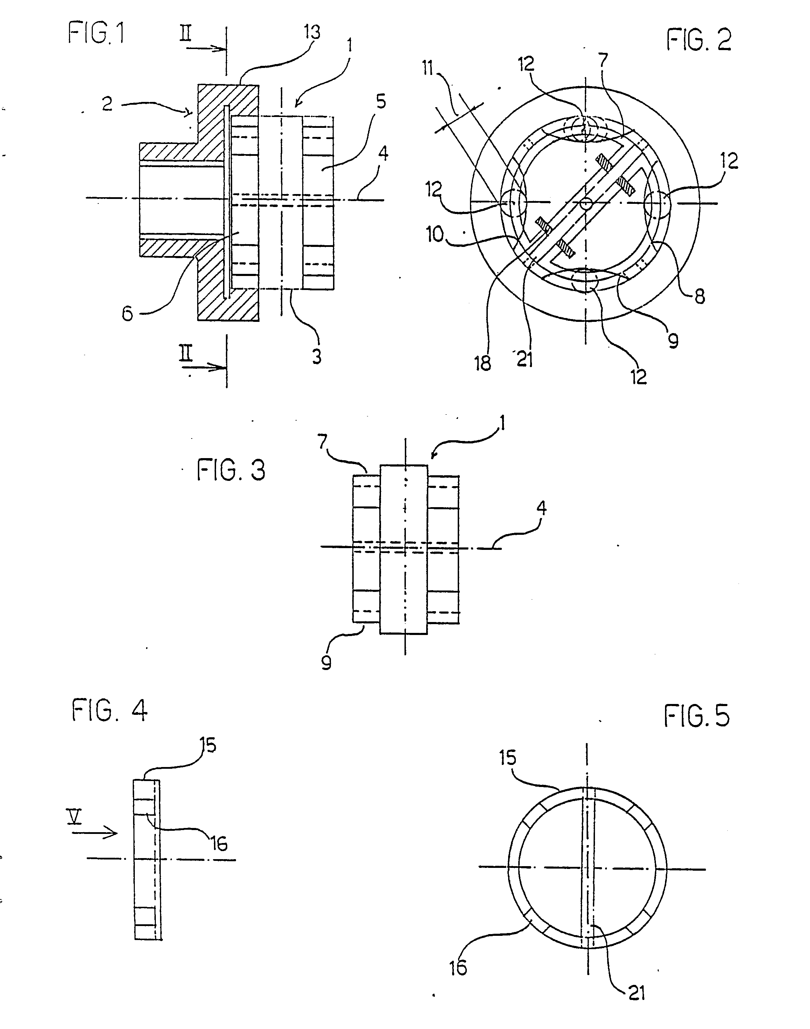

Wie in den Figuren 1-5 gezeigt, besteht in einer ersten Ausführungsform die Sperrkupplung aus einem im allgemeinen mit 1 angegebenen Antriebsglied und aus einem im allgemeinen mit 2 angegebenen Abtriebsglied. Das Antriebsglied 1 weist einen mittigen, im wesentlichen zylinderförmigen Körper 3 auf, mit dem nicht gezeigte Antriebe bekannter Art verbindbar sind, um die Kupplung um die Achse 4 in Drehung zu versetzen. Das Antriebsglied erstreckt sich in einen Endabschnitt 5 und in einen Endabschnitt 6. An jedem Endabschnitt 5, 6 sind längs des Umfanges konkave Sitze 7, 8, 9 und 10, die längs des Umfanges selbst gleichförmig verteilt sind. Jeder konkave Sitz weist ein Krümmungsradius derart auf, daß die maximale Tiefe 11 etwas größer ist als der Durchmesser einer Rolle 12, die in jedem der konkaven Sitze 2 aufgenommen ist.

Jeder Endabschnitt 5, 6 ist drehbar in einem Flansch 13 des Abtriebgliedes 2 eingebracht, der über ein Keilprofil 14 mit einem in Drehung zu versetzenden Mittel verbunden ist.

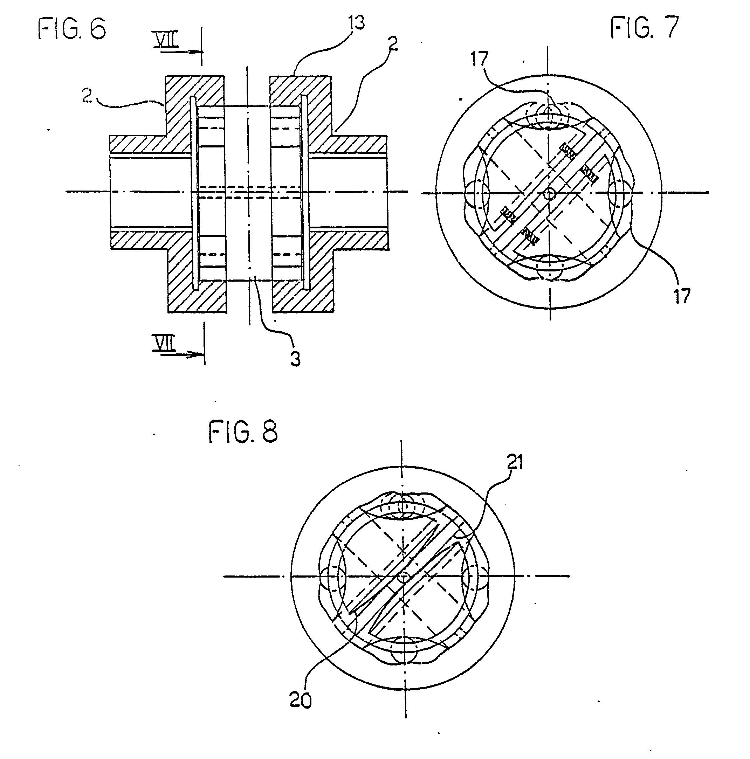

Die Rollen 12 sind überdies drehbar von entsprechenden Einbuchtungen 17 aufgenommen, die an einem Führungsring 15 ausgenommen sind, der um die Achse 4 drehbar ist und elastisch von auf einen Balken 21 einwirkenden Schraubenfedern 18 beaufschlagt wird, wobei der Balken mit dem Führungsring 15 längs des Durchmessers desselben derart verbunden ist, daß er dazu neigt, die Rollen 12 in die mittige Stellung oder in die Stellung der maximalen Tiefe 11 der konkaven Sitze zu bringen. Anstelle von Schraubenfedern 18 können auch, wie in Figur 8 dargestellt, Blattfedern 20 vorgesehen sein.

Die Schraubenfedern 18 sind nur beispielsweise dargestellt. Sie könnten auch in einer kleineren Anzahl vorhanden sein, z.B. zwei, oder sie könnten auch gänzlich fehlen.

Wie in den Figuren 6-8 dargestellt, kann die innere Gleitfläche 17, wie in den Figuren 7 und 8 gezeigt, auch wellenförmig ausgeführt sein, damit die Rolle 12 mit mehr Stabilität in der mittigen Stellung gehalten werden kann, wenn die Winkelgeschwindigkeit des Abtriebsgliedes 13 größer ist als die Winkelgeschwindigkeit des Antriebsgliedes 3.

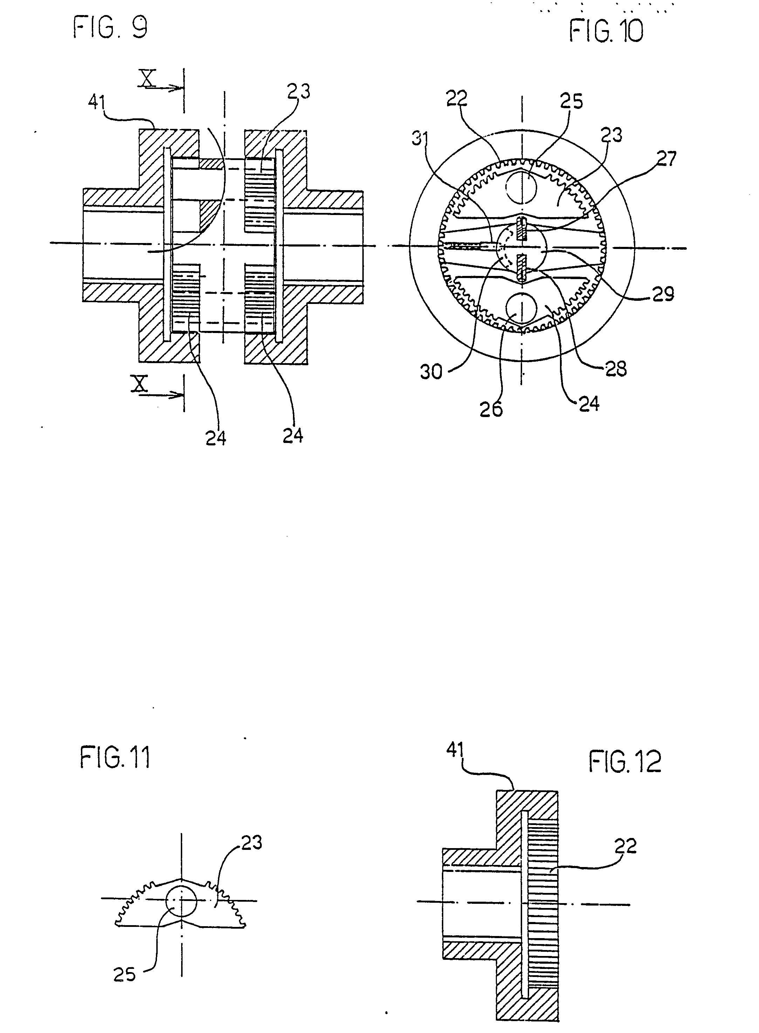

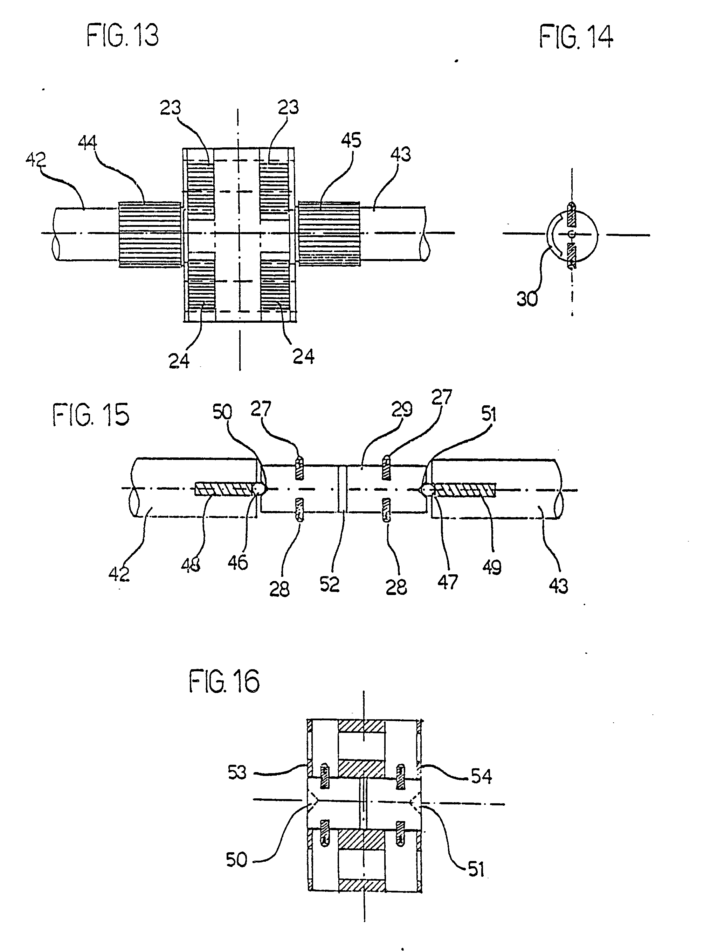

Wie in den Figuren 9-16 gezeigt, trägt ein Antriebsglied an jeder planen Endfläche zwei Zahnsektoren 23 und 24, die jeweils drehbar von diametral gegenüber der Drehachse 4 und außermittig gegenüber derselben angeordneten Bolzen 25 und 26 getragen werden. Die Drehachse eines jeden Bolzens 25 und 26 ist derart angeordnet, daß die kreisförmige Zahnung eines jeden Zahnsektors gegenüber dem Bolzen selbst spiegelbildlich angesetzt ist. Auf die Basis eines jeden Zahnsektors 23, 24 wirkt auf eine kurvenförmige Einbuchtung jeweils eine Feder 27 bzw. 28 ein. Jede Feder 27, 28 ist durch einen sie aufnehmenden Dorn 29 belastet, der drehbar durch das Antriebsglied derart geführt ist, daß in der stabilen Stellung jeder Zahnsektor 23, 24 mit einem bestimmten Abstand von einem kreisförmigen Innenkranz 22 eines Flansches 41 des Abtriebgliedes gehalten wird. Wie in den Figuren 13 und 15 gezeigt, ist der Dorn 29 seinerseits an seinen Enden durch Achswellen 42 bzw. 43 beaufschlagt, die mittels jeweils eines Keilprofiles 44, 45 des Abtriebsgliedes 41 gekuppelt sind. Dazu ist im Endabschnitt einer jeden Achswelle 42, 43 jeweils eine Feder 48, 49 aufgenommen, die axial auf jeweils eine Kugel 46, 47 gegen einen in den Stirnmitten 50, 51 des Dornes 29 angeordneten Sitz 50 bzw. 51 drückt. Sömit wird bei einer Relativbewegung zwischen der Achswelle 42 bzw. 43 und dem Dorn 29, dieser letztere in eine durch einen festliegenden Anschlag 31 begrenzte Drehung mitgenommen, wobei der festliegende Anschlag 31 am mittigen Körper des Antriebsgliedes (Figur 10) befestigt ist und in eine kreisbogenförmige Nut 30 ragt, deren Enden die Endanschläge des festliegenden Anschlages 31 bilden.

Wie in Figur 16 gezeigt sind zur Vermeidung von übermäßigen Durchbiegungen der Bolzen 25 und 26 deren Enden drehbar von Wänden 53, 54 getragen, die auch vom Dorn 29 drehbar durchsetzt werden. Um eine angemessene Schmierung des Dornes 29 in seinem Sitz zu erlauben ist dazu z.B. eine durchgehende Bohrung 52 in ihm vorgesehen.

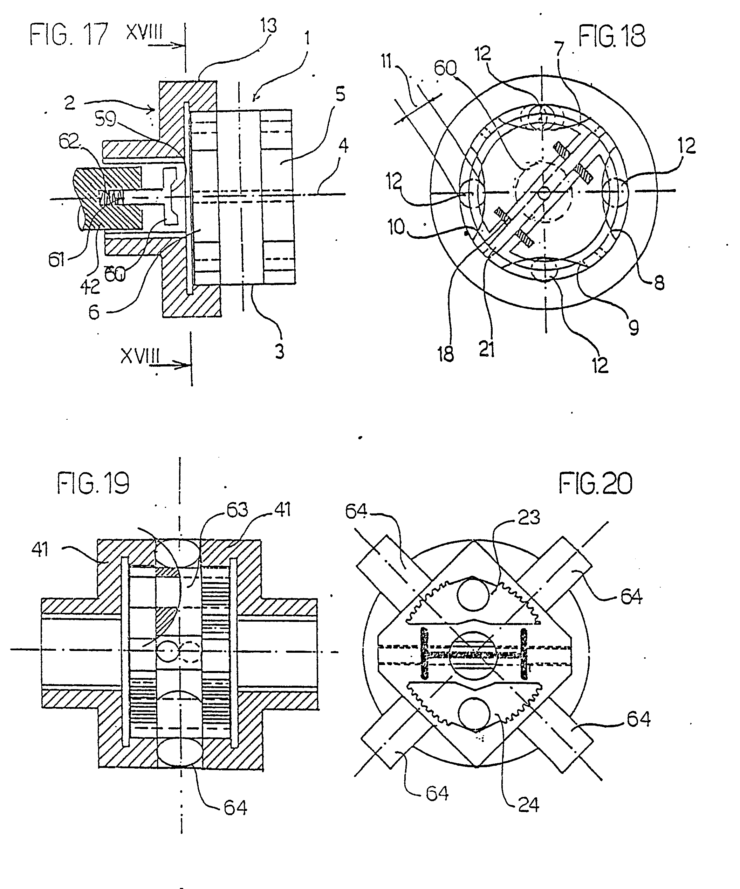

In den Figuren 17 und 18 ist der Balken 21, der auch in Figur 2 dargestellt ist, dazu geeignet mit einem Quersitz 59 verbunden zu werden, der aus der dem Balken 21 gegenüberliegenden Stirnfläche des Kopfes eines Dornes 60 ausgearbeitet ist. Dieser letztere ist im Bereich seines Schaftes axial gleitbar, jedoch nicht drehbar, von einem axialen Sitz 61 aufgenommen, der im Endabschnitt eines Abtriebsgliedes, z.B. einer Achswelle 62, ausgearbeitet ist. Zwischen dem Boden des Sitzes 61 und dem Fuß des Dornes 60 ist eine Druckfeder 62 zwischengeschaltet, die dazu bestimmt ist, den Dorn 60 elastisch auf den Balken 21 zu drücken. Es liegt nahe, daß der Quersitz 59 derart ausgebildet ist, daß der Balken 21 von ihm ausrasten kann, sobald die Eingriffselemente, in diesem Fall die Rollen 12, zwischen dem Antriebsglied und dem Abtriebsglied verspannt sind.

In den Figuren 19-31 ist eine Variante der in den Figuren 9-16 dargestellten Auführungsform dargestellt. Entsprechende Teile werden daher in der folgenden Beschreibung mit denselben Bezugszeichen angegeben.

Im vorliegenden Fall ist der mittige Körper 3 durch ein Gelenkkreuz 63 mit Bolzen 64, bekannter Art und daher nicht weiters beschrieben, gebildet.

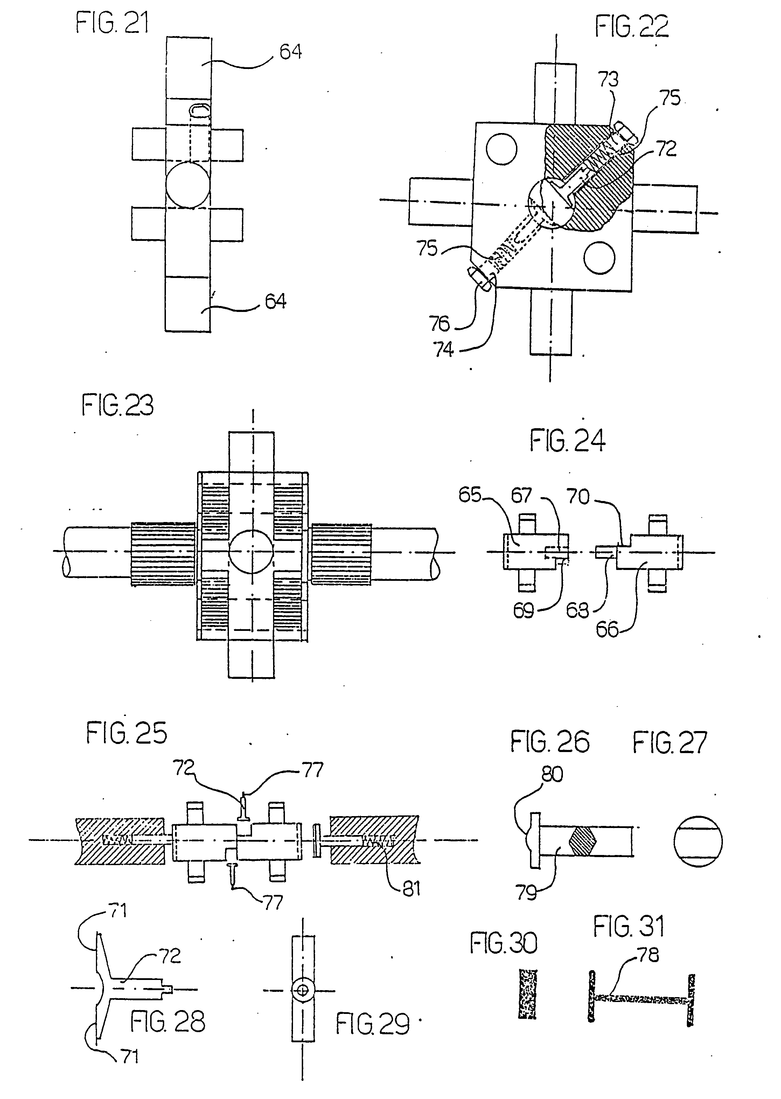

Anstelle des Dornes 29 der Figur 10 sind ein erster Bolzen 65 und ein zweiter Bolzen 66 vorgesehen, die axial miteinander frei drehbar nach Nut und Feder-Art verbunden sind (Sitz 67 und Stift 68), so wie in den Figuren 24 und 25 dargestellt. Jeder Bolzen 65, 66 weist an seinem dem anderen Bolzen zugewandten Abschnitt eine Abflachung 69 bzw. 70 auf, von denen jede mit seitlichen Schuhen 71 eines Drückers 72 (Figuren 28 und 29) in Berührung kommt, dessen Schaft jeweils in einer Bohrung 73 bzw. 74 geführt ist. Die genannten Bohrungen 73 und 74 sind jeweils in untereinander versetzten und zur Drehachse des Körpers des Gelenkkreuzes senkrechten Ebenen im Körper ausgearbeitet. Jeder Drücker 72 ist im Bereich seiner zu den Schuhen 71 abgewandtem Ende durch eine Feder 75 elastisch beaufschlagt, die jeweils durch eine in den Bohrungen 73 bzw. 74 eingeschraubte Schraube 76 abgestützt ist. Für eine sichere Zentrierung jeder Feder 75 ist jeder Drücker mit einer Verlängerung 77 versehen. Jeder Bolzen 65, 66 weist an seinem dem anderen Bolzen abgewandten Ende einen Sitz auf, der dazu bestimmt ist durch Formschluss ein H-Profil (Figuren 30 und 31) aufzunehmen, das derart ausgerichtet ist, daß es auf die Zahnsektoren 23, 24 im Sinne eines Eingriffes oder einer Ausrastung dieser letzteren im bzw. vom Zahnkranz 22 einzuwirken, sobald der Bolzen 65 bzw. 66 von einem Dorn 79 mittels seines Kopfes 80 in Drehung versetzt wird, der auf lösbare Art und Weise mit dem freien Ende des Bolzens 65 bzw. 66 verbindbar ist und durch eine Feder 81 axial gedrückt wird.

Anstelle der Kontrastmittel zur Steuerung der Zahnsektoren könnten diese eventuell auch nur gegenseitig mit elastischen Mitteln, wie Federn, beaufschlagt werden.

Die Wirkungsweise der Klemmvorrichtung in den verschiedenen Ausführungsformen ist naheliegend: Es ist zu bemerken, daß bei einer positiven Relativbewegung des Abtriebsgliedes sowohl durch den Eingriff des Ringes 15 als auch durch die Mitnahme des Dornes 29, das Eingriffselement, d.h. die Rolle 12 oder der Zahnsektor 26, 25 in eine Leerlaufstellung außer Eingriff mit der entsprechenden Kupplungsfläche des Abtriebsgliedes gebracht wird. So wird es dem Abtriebsglied selbst ermöglicht, sich ohne Ausnützung der übertragenen Kraft des Antriebsgliedes frei zu drehen, wobei die übertragene Kraft hingegen nur dem anderen Abtriebsmittel übertragen wird.

Weitere Varianten, Änderungen und Verbesserungen sind ohne weiters möglich, ohne den Schutzbereich der vorliegenden Erfindung zu verlassen. So könnten anstelle der Rollen Kugeln oder irgend ein anderes Eingriffselement vorgesehen sein, das dazu bestimmt ist, zwischen der Mitnahmefläche und der mitgenommenen Fläche sich zu verspannen. Sowohl das Eingriffselement als auch die beiden Kontrastflächen können entsprechend ausgebildete Strukturen aufweisen, um ein Verrutschen des Eingriffselementes selbst bei der Verspannung zwischen den beiden Kupplungsflächen zu vermeiden. So kann auch die Anzahl aller Eingriffselemente beliebig sein, und zwar in Abhängigkeit der zu übertragenden Kraft und der Abmessungen der Kupplung selbst.

Auch was die Verwendungsmöglichkeiten betrifft, wird die erfindungsgemäße Kupplung in den verschiedensten Sektoren Anwendung finden: So könnte z.B. diese Kupplung nicht nur auf den Kraftfahrzeugsektor Verwendung finden, sondern auch für Werkzeugmaschinen oder als beliebiges Werkzeug, wo die beschriebenen Probleme gegeben sind.

**Ansprüche**

1. Sperrkupplung mit Ausrastung eines Abtriebsgliedes aus einem Antriebsglied bei einer positiven Relativbewegung zwischen dem Abtriebsglied und dem Antriebsglied, wobei ein eine Drehbewegung übertragendes Glied mit einem Abtriebsglied mittels mindestens einer Klemmvorrichtung verbindbar ist, die fähig ist, das Abtriebsglied am Antriebsglied festzulegen, sobald die Geschwindigkeit des Abtriebsgliedes dazu neigt, gegenüber der Winkelgeschwindigkeit des Antriebsgliedes abzufallen, und das Abtriebsglied aus dem Antriebsglied auszurasten, sobald die Winkelgeschwindigkeit des Abtriebsgliedes die Winkelgeschwindigkeit des Antriebsgliedes übersteigt, **dadurch gekennzeichnet,** daß die erwähnte Klemmvorrichtung von einem zur Drehachse (4) auf einer zwangsläufigen Bahn (7, 8, 8, 10; 25, 26) radialbeweglichen, an einem der beiden Glieder (1, 2) vorgesehenen Eingriffselement (12, 23, 24), von einer am anderen Glied (2, 1) vorgesehenen Kontrastbahn (13, 22) und von Mitnahmemitteln (15; 29, 27, 28) gebildet ist, die dazu fähig sind, die beiden Glieder im gegenseitigem Eingriff zu bringen, sobald das Abtriebsglied dazu neigt, seine Winkelgeschwindigkeit gegenüber jener des Antriebsgliedes zu vermindern.

2. Sperrkupplung nach Anspruch 1, **dadurch gekennzeichnet,** daß vier Klemmvorrichtungen vorgesehen sind, von denen jedes Eingriffselement aus einer Rolle (12) besteht, die von einem konkaven, kreisbogenförmigen, auf einem kreisförmigen Umfang des Antriebsgliedes (1) im Bereich mindestens eines seines Außenabschnittes ausgenommenen Sitz (7, 8, 9, 10) aufgenommen ist, wobei die vier Sitze gleichförmig auf dem genannten kreisförmigen Umfang mit zur Drehachse (4) des Antriebsgliedes (1) parallelen Krümmungsachsen verteilt sind, wobei der genannte Außenabschnitt außen von einem eine kreisförmige Innenfläche aufweisenden Flansch (13) umfaßt wird, der an einem Rohrabschnitt festliegt, der mit einem in Drehung zu versetzenden Mittel verbindbar ist, wobei ein mit Aussparungen (16) versehener Ring, der die Rollen (12) drehbar führt, in einer kreisförmigen zur Drehmitte des Antriebsgliedes koaxialen Nut verschiebbar ist.

3. Sperrkupplung nach Anspruch 1, **dadurch gekennzeichnet,** daß zwei Klemmvorrichtungen vorgesehen sind, von denen jedes Eingriffselement aus einem kreisförmigen Zahnsektor (23, 24) besteht, der drehbar von einem an mindestens einer der Stirnflächen des Antriebsgliedes (1) außermittig befestigten Zapfen (25, 26) getragen wird, wobei die Zahnung gegenüber dem Haltezapfen (25, 26) spiegelbildlich angeordnet ist, wobei auf die Basis eines jeden Zahnsektors auf einer kurvenförmigen Einbuchtung ein elastisches und von einem im Antriebsglied (1) drehbaren Dorn (29) beaufschlagtes Mittel einwirkt, wobei der Dorn (29) seinerseits mittig vom Abtriebsglied (2) elastisch beaufschlagt wird, sodaß der Dorn (29) bei einer Relativbewegung innerhalb eines von zwei Anschlägen begrenzten Winkel in Drehung gebracht wird, wobei die beiden Anschläge mit einem am Körper des Antriebsgliedes festliegenden Anschlag (31) derart in Berührung kommen, daß die Zähne des Zahsektors mit einem inneren Zahnkranz (22) eines am Abtriebsglied festliegenden Flansches in Eingriff kommt.

4. Sperrkupplung nach Anspruch 2, **dadurch gekennzeichnet,,** daß der Ring (15) in seiner Drehung elastisch derart belastet wird, daß die Eingriffselemente bei Freilauf in einer stabilen Stellung gehalten werden.

5. Sperrkupplung nach Anspruch 4, **dadurch gekennzeichnet,** daß der Ring von Schraubenfedern belastet wird, die auf einen den Ring diametral verbindenden Balken einwirken.

6. Sperrkupplung nach Anspruch 4, **dadurch gekennzeichnet,** daß der Ring von Blattfedern belastet wird.

7. Sperrkupplung nach Anspruch 3, **dadurch gekennzeichnet,** daß die Enden der Bolzen (25, 26) von Endwänden (53, 54) abgestützt werden.

8. Sperrkupplung nach Anspruch 3, **dadurch gekennzeichnet,** daß im Dorn (29) Schmierleitungen (52) vorgesehen sind.

9. Sperrkupplung nach einem der Ansprüche 2, 4 und 5, **dadurch gekennzeichnet,** daß dem Balken (21) der Kopf eines Dornes (60) gegenüberliegt, der im Bereich seines Schaftes axial verschiebbar, jedoch nicht verdrehbar, in einem axialen, im Endabschnitt eines Abtriebsgliedes (42) ausgearbeiteten Sitz (61) aufgenommen ist, wobei zwischen dem Boden des Sitzes (61) und dem Fuß des Dornes (60) eine Druckfeder (62) zwischengeschaltet ist, die dazu bestimmt ist, den Dorn (60) elastisch auf den Balken (21) zu drücken.

10. Sperrkupplung nach Anspruch 1, **dadurch gekennzeichnet,** daß zwei Klemmvorrichtungen vorgesehen sind, von denen jedes Eingriffselement aus einem kreisförmigen Zahnsektor (23, 24) besteht, der drehbar von einem an mindestens einer der Stirnflächen des Antriebsgliedes außermittig befestigtem Zapfen (25, 26) getragen wird, wobei die Zahnung gegenüber dem Haltezapfen spiegelbildlich angeordnet ist, wobei auf die Basis eines jeden Zahnsektors, außermittig zu den Bolzen (25, 26), ein Mittel (78) einwirkt, das jeweils von einem ersten (65) und von einem zweiten Bolzen (66) getragen wird, denen in ihrer Drehung ein Drücker (72) entgegenwirkt, der radial und elastisch auf eine Abflachung (69, 70) eines jeden Bolzens (65, 66) einwirkt, wobei jeder Bolzen (65, 66) am seinen dem anderen Bolzen abgewandten Ende eine Stirnfläche aufweist, die auf lösbare Weise mit dem Kopf (80) eines Dornes (79) verbindbar ist, der axial von einer Feder (81) gegen jeden der genannten Bolzen (65, 66) gedrückt wird.

FIG.1

FIG. 2

FIG. 3

FIG. 4

FIG.5

FIG. 6

FIG. 7

FIG. 8

FIG. 9

FIG. 10

FIG. 11

FIG. 12

FIG. 13

FIG. 14

FIG. 15

FIG. 16

FIG. 17  XVIII

FIG.18

FIG.19

FIG.20

FIG. 21

64

64

FIG. 22

73

75

72

75

76

74

FIG. 23

FIG. 24

65 67 70

69 68

66

FIG. 25

72 77

77

81

FIG. 26    FIG. 27

80

79

71

72

FIG. 28

71

FIG. 29

FIG. 30

FIG. 31

78

Europäisches Patentamt

EUROPÄISCHER RECHERCHENBERICHT

Nummer der Anmeldung

EP 88 20 0782

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 127 914 (DANA CORP.) * Insgesamt * --- | 1,2,4 | F 16 D 43/02 F 16 D 41/10 F 16 H 35/04 |
| X | DE-C- 461 410 (SCHMALZBAUER) * Insgesamt * | 1,2 | |
| Y | | 4 | |
| | --- | | |
| X | US-A-1 535 790 (RICHARDSON) * Insgesamt * | 1 | |
| Y | | 4 | |
| | --- | | |
| X | DE-C- 435 561 (BERTHOLD) * Insgesamt * --- | 1,2 | |
| X | GB-A-2 186 643 (THORN EMI) * Insgesamt * | 1,3,7 | |
| A | | 10 | |
| | --- | | |
| X | FR-A- 376 775 (BELT) * Insgesamt * | 1 | |
| A | | 3,10 | RECHERCHIERTE SACHGEBIETE (Int. Cl.4) |
| | --- | | |
| X | US-A-3 344 686 (BAKER) * Insgesamt * | 1 | F 16 D 43/00 F 16 D 41/00 F 16 D 15/00 F 16 H |
| A | | 3,10 | |
| | --- | | |
| X | DE-B-2 516 813 (MANNESMANN AG) * Insgesamt * --- | 1 | |
| X | US-A-2 301 849 (BIALY) * Insgesamt * --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 29-07-1988 | BALDWIN D.R. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-1 806 340  (FRANCIS)<br>* Seite 2,3; Figuren 2,3 *<br>--- | 1 | |
| X | GB-A-  639 904  (GARRETT CORP.)<br>* Insgesamt *<br>----- | 1 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 29-07-1988 | BALDWIN D.R. |

EPO FORM 1503 03.82 (P0403)